# EUROPEAN PATENT SPECIFICATION

(11) **EP 0 889 538 B1**
(45) Date of publication and mention of the grant of the patent: **14.11.2001**
(21) Application number: 98111828.4
(22) Date of filing: 26.06.1998
(51) Int. Cl.: H01Q 1/32

(54) **Antenna apparatus for vehicles**
Kraftfahrzeug-Antennenvorrichtung
Dispositif d'antenne pour véhicules

(30) Priority: 30.06.1997 JP 18902897
(43) Date of publication of application: 07.01.1999
(73) Proprietor: Niles Parts Co., Ltd., Tokyo 143 (JP)
(72) Inventor: Yamamoto, Harushige, Ota-ku, Tokyo 143 (JP)
(74) Representative: Luderschmidt, Schüler & Partner GbR

(56) References cited:
- EP-A- 0 706 921
- US-A- 4 973 958
- PATENT ABSTRACTS OF JAPAN vol. 97, no. 2, 28 February 1997 & JP 08 268227 A (FUJITSU TEN LTD.), 15 October 1996
- PATENT ABSTRACTS OF JAPAN vol. 9, no. 274 (E-354), 31 October 1985 & JP 60 117898 A (TOYOTA JIDOSHA K.K.), 25 June 1985
- PATENT ABSTRACTS OF JAPAN vol. 96, no. 3, 29 March 1996 & JP 07 312513 A (NILES PARTS CO. LTD.), 28 November 1995

## Description

This invention relates to a technology improved over systems for vehicles with an antenna apparatus.

Conventionally, there has been known a keyless entry apparatus for unlocking vehicular doors by using radio waves. This keyless entry apparatus had an exclusive antenna that is set for example on the rear window glass and a receiving circuit arranged within the trunk, in order to increase the signal-receiving sensitivity. The receiving circuit and the antenna were connected therebetween through a coaxial cable. Incidentally, there is a technology of this kind shown in Unexamined Japanese Utility Model Publication No. H4-86382.

However, the above-stated conventional art requires a coaxial cable for connecting between the receiving circuit and the antenna, a connector exclusive for the coaxial cable, a case for accommodating the receiving circuit, a power source line for supplying radio waves to the receiving circuit, resulting in expensive in apparatus price.

JP 08 26 8227 A discloses a system comprising a receiving circuit with an antenna provided on a vehicle and a responding means which can be carried by an operator. The responding means sends out a signal which is received by the antenna. Afterwards a control circuit judges whether the disrimination code of the signal coincides with a regular code.

US 4,973,958 discloses a keyless entry system for a car comprising a portable transmitter and a controller placed inside the car and associated with a vehicle device.

It's a drawback that both systems cannot be used for controlling several functions of the vehicle. simultaneously.

EP 0 706 921 discloses a security lock for a vehicle wich comprises an antenna placed near the ignition lock.

These problems are solved by a system according to claim 1.

According to the invention, the frequency and modulation method of a radio wave generated from a keyless entry apparatus outside a vehicle and the frequency and modulation method of a radio wave generated from a remote control unit inside a compartment are placed in a same frequency; and the both radio waves are received by the antenna of a switching device.

Therefore, it is natural that the radio wave transmitted from the keyless entry apparatus outside the vehicle is free of obstruction by the electromagnetically shielded vehicular body, and can be received by the antenna with high sensitivity. It is also possible to provide an inexpensive apparatus that does not require a coaxial cable for connection the receiver circuit and the antenna, a connector exclusive for the coaxial cable, a case for housing the receiver circuit, a power source line exclusive for supplying a power to the receiver circuit, but also to use the antenna for also receiving the radio wave generated by the remote control unit within a vehicular compartment to reduce the total price of the vehicle. Thus, many effects are available.

Also, the invention recited in claim 1 provides an antenna apparatus for vehicles that the remote control unit (5) is a remote control unit (5) for remote-controlling a vehicular load at a seat other than a driver's seat.

Since the remote control unit is a remote control unit for remote-controlling a vehicular load at a seat other than a driver's seat, there is another effect, in addition to the above effect, that the radio wave generated at the other seat can be received by the antenna for the keyless entry.

Also, the invention recited in claim 3 provides an antenna apparatus for vehicles that the antennas are placed to a predetermined distance from the steering shaft of the vehicle.

Also, the invention recited in claim 4 provides an antenna apparatus for vehicles that the antennas are placed distant by a predetermined distance from ground patterns.

Since the antennas are placed distant from the steering shaft or the ground pattern of the vehicle, there is another effect, in addition to the above effects, that the transmitting and receiving sensitivity of the antenna becomes preferable.

A preferred embodiment according to the present invention will be explained based on the attached drawings in which
Fig.1 is a perspective view showing an embodiment of the present invention.
Fig.2 is an electric circuit diagram exemplifying a control unit circuit incorporated in a column switch shown in Fig. 1; and
Fig.3 is an electric circuit diagram exemplifying a circuit incorporated in a handle shown in Fig. 1.

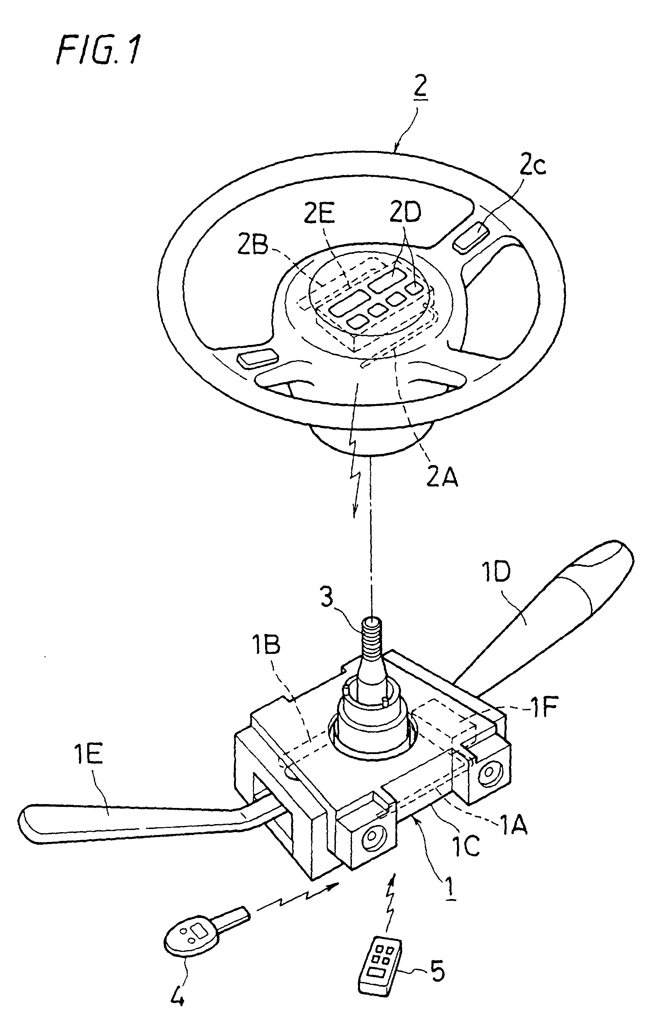

Fig. 1 is a perspective view showing a steering wheel 2 of a vehicle and a switching device 1 attached to a back side of the steering wheel 2. The switching device 1 is attached, for example, to a steering column section (not shown) positioned on the back side of the steering wheel 2, and provided, at the left and right of the switch main body 1C, with operating levers 1D, 1E to be operated by a driver.

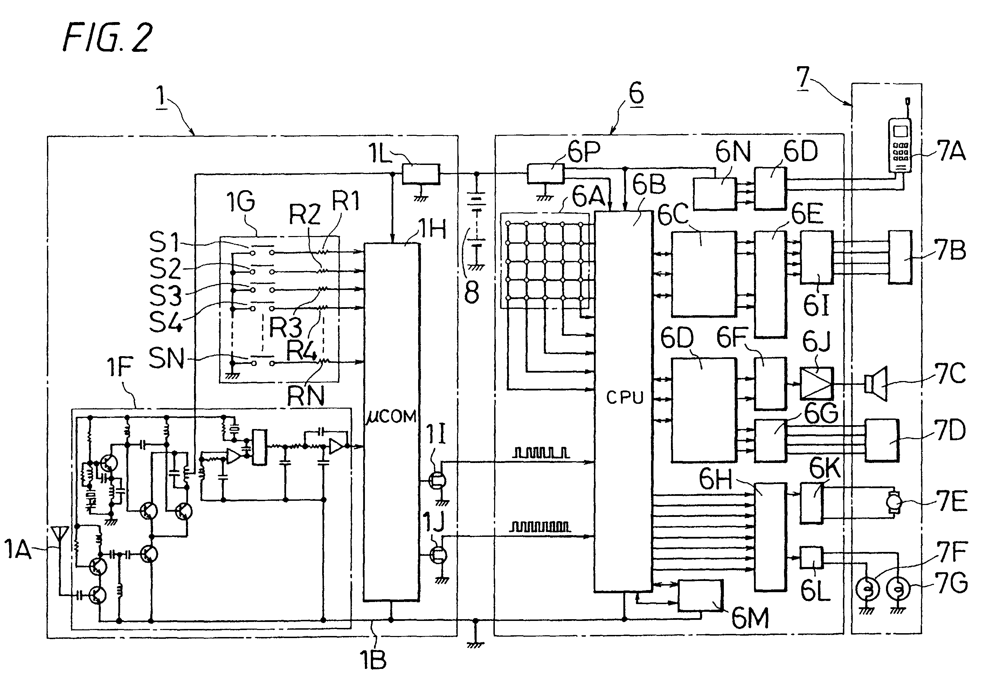

These levers 1D, 1E are levers to operate, for example, a wiper operating system circuit, a light on-off operating system circuit, and a turn-signal lamp operating system circuit of the vehicle. The operation of the lever 1D, 1E causes turning on/off of a plurality of combination switch sections 1G (see Fig. 2) related to wiper operation, light on-off operation and turn-signal lamp operation within the switch main body 1C. Also, the switch main body 1C has therein a printed board (not shown) so that an antenna 1A and a receiver circuit 1F are mounted on the printed board.

Fig. 2 exemplifies a circuit incorporated in the afore-said switching device 1. In Fig. 2, a receiver circuit 1F is a circuit for demodulating an encoded signal from an radio wave received by an antenna 1A, and has an output end connected to a micro-computer 1H at a rear stage. The radio waves received by this antenna 1A are radio waves that are transmitted from the steering wheel 2, a keyless entry apparatus 4, and a remote control device 5. These radio waves are set at a same frequency and use the same modulation method.

The above micro-computer 1H is also connected with the combination switch section 1G. The micro-computer 1H is programmed such that it outputs an encoded signal through a first output section 1I in response to input signals from a receiver circuit 1F and the combination switch section 1G, and outputs simultaneously therewith a synchronizing/clock signal through a second output section 1J. These encoded signal and synchronizing/clock signal are inputted to a control unit 6, hereinafter referred to.

The receiver circuit 1F, the combination switch section 1G, the micro-computer 1H, the first output section 1I, and the second output section 1J of the switching device 1 are respectively connected to a ground pattern 1B. However, the conductor pattern of the printed board is designed such that the antenna 1A is distant from the ground pattern 1B, for example, by 10 mm or greater, and from a steering shaft 3 penetrated through a center of the switching device 1, for example, by 10 mm or greater. That is, by separating the antenna 1A from the ground, the signal-receiving sensitivity is made favorable.

In the case of unlocking the door from the outside of the vehicle, an radio wave is transmitted from the keyless entry apparatus. The radio wave usable for the keyless entry apparatus 4 is determined in the frequency and the electric field strength by the radio wave control raw. For example, the frequency is limited to several hundreds MHz or below, while the electric field is restricted to several hundreds µV/m · at a location distant by several m from a transmission source. Therefore, where the frequency of the radio wave to be received by the antenna 1A is set at several hundreds MHz, the length of the antenna 1A may be set at several tens cm The switching device 1 in its attaching position is close to the vehicular front glass so that the radio wave transmitted from a radio wave transmitting source can be received by the antenna 1A with high sensitivity without being blocked by the electromagnetically-shielded vehicular body.

Incidentally, although the receiver circuit 1F shown in Fig. 2 exemplifies an FM demodulation type receiving circuit, it is an existing circuit and no detailed explanations will be made. Also, the combination switch section 1G is connection-structured by switches S1, S2, S3, S4 ... SN and resistances R1, R2, R3, ... RN. Also, the structure denoted by a symbol 1L in Fig. 2 is a voltage regulator.

The control unit 6 connected to the switching device 1 is a unit for controlling vehicular loads 7 comprising a hand-free section 7A, a display section 7B, a speaker section 7C, an air-conditioning section 7D, a door locking actuator section 7E, and lamp sections 7F, 7G, and incorporated, for example in an AV (Audio Visual) device provided, for example, in a center console section. This control unit 6 is connection-structured, as shown in Fig. 2, by a touch switch 6A, CPUs 6B, 6C, 6D, a visual driver 6E, an audio driver 6F, an air-conditioner driver 6G, a power drive section 6H, an output section 6I, an amplifier 6J, relays 6K, 6L, a ROM 6M, a controller 6N, a TEL block 60, and a voltage regulator 6P. The above switching device 1 and the control unit 6 are connected to a direct-current power source 8 for the vehicle.

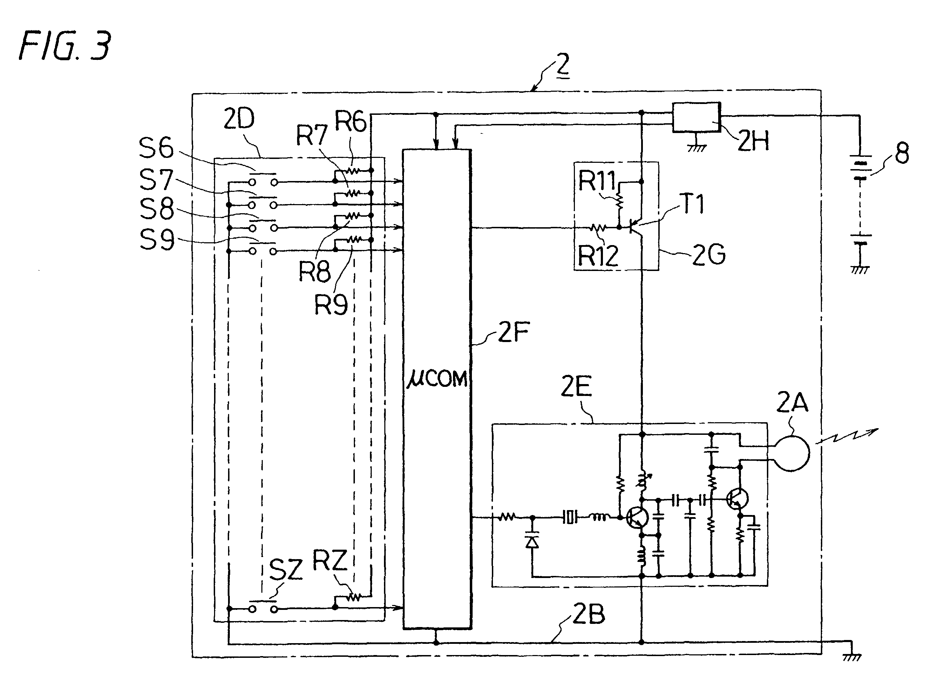

Then, the steering wheel 2 will be explained. This steering wheel 2 has a remote control switch 2D in a pad section, besides an existing horn switch 2C, and incorporates thereunder a transceiver circuit 2E, etc. as shown in Fig. 3. The transceiver circuit 2E is a circuit for demodulating the encoded signal outputted by the micro-computer 2F to transmit as a radio wave through the antenna 2A, depending on operation of the remote control switch 2D, and has an input end connected to the micro-computer at a front stage. The radio wave transmitted by the antenna 2A is set at the same frequency as the radio wave transmitted by the keyless entry apparatus 4.

A power source line for the transceiver circuit 2E is connected with a switch circuit 2G comprising a transistor T1 and resistances R11, R12 so that the transceiver circuit 2E can be turned on/off by the micro-computer 2F. Incidentally, although the transceiver circuit 2E shown in Fig. 3 exemplifies an FM modulation type transmitting circuit, it is an existing circuit and no detailed explanations will be especially made. Also, the remote control switch 2D is connection-structured by switches S6, S7, S8, S9 ... SZ and resistances R6, R7, R8, R9 ... RZ. Also, the structure denoted by a symbol 2H in Fig. 3 is a voltage regulator.

The remote control switch 2D, the transceiver circuit 2E, and the micro-computer 2F of the steering wheel 2 are resprectively connected to a ground pattern 2B. However, the conductor pattern of the printed board is designed such that the antenna 2A is distant from the ground pattern 2B, for example, by 10 mm or greater, and from the steering shaft 3 penetrated through the center of the switching device 1, for example, by 10 mm or greater. That is, by separating the antenna 2A from the ground, the signal-receiving sensitivity is made favorable.

Then the operation of the above embodiment will be explained. For example, if a radio wave is transmitted from the keyless entry apparatus 4 outside the vehicle, the radio wave is received by the antenna 1A of the column switch 1 and be inputted into the receiver circuit 1F. The receiver circuit 1F wave-detects a high frequency signal to extract an encoded signal carried by the high frequency signal, inputting it to the micro-computer 1H. The micro-computer 1H compares the inputted encoded signal with a pre-stored reference code. As a result, if an ID code for the own vehicle is detected, determination is made for the kind of a control code transmitted in combination with the ID code. Where the control code represents a keyless entry, outputting is made for a corresponding encoded signal to the CPU 6B of the control unit 6 and a clock signal. This causes the control unit 6 to output a control signal to a door lock actuator 7E to thereby unlock the door.

Then, if a radio wave is transmitted from the remote control unit 5 within the vehicle, the radio wave is received by the antenna 1A of the switching device 1 and inputted to the receiver circuit 1F. The receiver circuit 1F wave-detects a high frequency signal to extract an encoded signal carried by the high frequency signal, inputting it to the micro-computer 1H. The micro-computer 1H determines the kind of a control code from the inputted encoded signal and a pre-stored reference code to output a corresponding encoded signal to the CPU 6B of the control unit 6 and a clock signal. This causes the control unit 6 to output, for controlling, a control signal to an air-conditioning section 7D or the like.

Then, if a radio wave is transmitted from the steering wheel 2, the radio wave is received by the antenna 1A of the switching device 1 and inputted to the receiver circuit 1F. The receiver circuit 1F wave-detects a high frequency signal to extract an encoded signal carried by the high frequency signal, inputting it to the micro-computer 1H. The micro-computer 1H determines the kind of a control code from the inputted encoded signal and a pre-stored reference code to output an corresponding encoded signal to the CPU 6B of the control unit 6 and a clock signal. This causes the control unit 6 to output, for controlling, a control signal to a had-free section 7A, a display section 7B, a speaker section 7C, and the air-conditioning section 7D or the like.

The modulating method by using the receiver may also adopt a method other than the FM modulating method. Further, the column switch is a switch around the vehicular handle, and not limited to the lever switch type one exemplified in Fig. 1.

### Explanations of symbols

- 1: switching device
- 2: steering wheel
- 3: steering shaft
- 4: keyless entry apparatus
- 5: remote control unit
- 6: control unit
- 7: vehicular loads

## Claims

1. A system for vehicles comprising
a keyless entry apparatus (4) for generating a radio wave which combines an Identification-Code unique to each vehicle and a control code that identifies itself as a keyless entry apparatus (4) for controlling a door lock actuator unit for locking/unlocking of the door of the vehicle, and
an antenna apparatus comprising an antenna (1A) for receiving radio waves and further comprising a receiver circuit (1F) for examining the combination of the Identification-Code unique to each vehicle and the control code received by the antenna (1A), for identifying the control code referring to a stored reference code list and for sending out an appropriate control signal to a corresponding unit to be controlled,
**characterized in that**
the system further comprises a remote control unit (5) for generating a radio wave with a control code which is unique to a unit to be controlled other than the door lock actuator unit (7E),
the keyless entry apparatus (4) and the remote control unit (5) use the same frequency and modulation method, the antenna (1A) of the antenna apparatus receiving both radio waves of said keyless entry apparatus (4) and said remote control unit (5), and
the antenna apparatus is placed inside a switching device (1) attached to a steering column.

2. System for vehicles according to claim 1, **characterized in that** the remote control unit (5) is a remote control unit (5) for remote controlling a vehicular load at a seat other than a driver's seat.

3. System for vehicles according to claim 1 or 2, **characterized in that** antennas (1A, 2A) are placed to a predetermined distance from the steering shaft (3) of the vehicle.

4. System for vehicles according to anyone of the preceding claims, **characterized in that** antennas (1A, 2A) are placed distant by a predetermined distance from ground-patterns (1B, 2B).

## Patentansprüche

1. Vorrichtung für Kraftfahrzeuge, umfassend
eine schlüssellose Zugangsvorrichtung (4) zur Erzeugung einer Radiowelle, welche einen für jedes Fahrzeug einmaligen Identifikationscode und einen Steuercode kombiniert, welcher sich selbst als schlüssellose Zugangsvorrichtung (4) zum Steuern einer Türschloss-Betätigungsvorrichtung zum Schließen/Öffnen der Fahrzeugstür identifiziert, und
eine Antennenvorrichtung, umfassend eine Antenne (1A) zum Empfang von Radiowellen und ferner umfassend eine Empfängerschaltung (1F) zum Prüfen der Kombination des für jedes Fahrzeug einmaligen Identifizierungscodes und des von der Antenne (1A) empfangenen Steuercodes, zur Identifizierung des Steuercodes in Bezug auf eine gespeicherte Bezugscodeliste und zum Senden eines geeigneten Steuersignals an eine entsprechende zu steuernde Einrichtung, **dadurch gekennzeichnet,**
**dass** die Vorrichtung ferner eine Fernbedienungseinrichtung (5) zur Erzeugung einer Radiowelle mit einem Steuercode umfasst, der für eine zu steuernde Einrichtung, welche sich von der Betätigungseinrichtung des Türschlosses (7E) unterscheidet, einmalig ist,
die schlüssellose Zugangsvorrichtung (4) und die Fernbedienungseinrichtung (5) die gleiche Frequenz und das gleiche Modulationsverfahren verwenden, wobei die Antenne (1A) der Antennenvorrichtung sowohl Radiowellen der schlüssellosen Zugangsvorrichtung (4) als auch der Fernbedienungseinrichtung (5) empfängt, und
**dass** die Antennenvorrichtung innerhalb einer Lenksäule befestigten Schaltvorrichtung (1) angebracht ist.

2. Vorrichtung für Fahrzeuge gemäß Anspruch 1, **dadurch gekennzeichnet, dass** die Fernbedienungseinrichtung (5) eine Fembedienungseinrichtung (5) zur Fernsteuerung einer Fahrzeuglast an einem Platz ist, der sich von dem Platz eines Fahrers unterscheidet.

3. Vorrichtung für Fahrzeuge gemäß Anspruch 1 oder 2, **dadurch gekennzeichnet, dass** die Antennen (1A, 2A) in einem zuvor festgelegten Abstand von der Lenksäule (3) des Fahrzeugs befinden.

4. Vorrichtung für Fahrzeuge gemäß einem der vorhergehenden Ansprüche, **dadurch gekennzeichnet, dass** die Antennen (1A, 2A) in einem zuvor festgelegten Abstand von den geerdeten Rastern (1B, 2B) beabstandet sind.

## Revendications

1. Système destiné à des véhicules comprenant
un dispositif d'ouverture sans clé (4) destiné à générer une onde radio qui combine un code d'identification unique à chaque véhicule et un code de commande qui s'identifie comme un dispositif d'ouverture sans clé (4) destiné à commander une unité d'actionneur de verrouillage de porte destinée à verrouiller/déverrouiller la porte du véhicule, et
un dispositif d'antenne comprenant une antenne (1A) destinée à recevoir des ondes radio et comprenant en outre un circuit de récepteur (1F) destiné à examiner la combinaison du code d'identification unique à chaque véhicule et le code de commande reçu par l'antenne (1A), en vue d'identifier le code de commande se rapportant à une liste de code de référence mémorisée et destinée à émettre un signal de commande approprié à une unité correspondante à commander,
**caractérisé en ce que**
le système comprend en outre une unité de commande à distance (5) destinée à générer une onde radio avec un code de commande qui est unique à une unité à commander autre que l'unité d'actionneur de verrouillage de porte (7E),
le dispositif d'ouverture sans clé (4) et l'unité de commande à distance (5) utilisent les mêmes fréquence et procédé de modulation, l'antenne (1A) du dispositif d'antenne recevant à la fois les ondes radio dudit dispositif d'ouverture sans clé (4) et de ladite unité de commande à distance (5), et
le dispositif d'antenne est placé à l'intérieur d'un dispositif de commutation (1) fixé à une colonne de direction.

2. Système destiné à des véhicules selon la revendication 1, **caractérisé en ce que** l'unité de commande à distance (5) est une unité de commande à distance (5) destinée à commander à distance une charge de véhicule au niveau d'un siège autre que le siège du conducteur.

3. Système destiné à des véhicules selon la revendication 1 ou 2, **caractérisé en ce que** des antennes (1A, 2A) sont placées à une distance prédéterminée de l'arbre de direction (3) du véhicule.

4. Système destiné à des véhicules selon l'une quelconque des revendications précédentes, **caractérisé en ce que** les antennes (1A, 2A) sont distantes d'une distance prédéterminée des motifs de masse (1B, 2B).
